Europäisches Patentamt

(19) European Patent Office

Office européen des brevets

(11) Publication number: **0 076 055 B1**

(12) **EUROPEAN PATENT SPECIFICATION**

(45) Date of publication of patent specification: **29.10.86**

(21) Application number: **82304777.4**

(22) Date of filing: **10.09.82**

(51) Int. Cl.⁴: **B 23 K 35/30**

### (54) Shielded metal arc welding electrode for Cr-Mo low alloy steels.

(30) Priority: **10.09.81 JP 143365/81**

(43) Date of publication of application:
**06.04.83 Bulletin 83/14**

(45) Publication of the grant of the patent:
**29.10.86 Bulletin 86/44**

(84) Designated Contracting States:
**CH DE LI SE**

(56) References cited:
**GB-A-1 030 326**
**US-A-3 490 942**

**WELDING JOURNAL, vol. 54, no. 9, September 1975, pages 288s-295s, Miami, USA, P.H.M. HART et al.: "Weld metal implant test ranks Cr-Mo hydrogen cracking resistance"**

**AUTOMATIC WELDING, vol. 32, no. 10, October 1979, pages 11-15, Cambridge, GB., S.V. EGOROVA et al.: "The resistances of steels containing nitrides to overheating during electroslag welding"**

**WELDING JOURNAL, vol. 55, no. 2, February 1976, pages 42s-46s, Miami, USA, W.K.C. JONES: "Reheat cracking susceptibility of some 2Cr-Mo submerged arc weld metals"**

(73) Proprietor: **KABUSHIKI KAISHA KOBE SEIKO SHO**
**3-18 1-chome, Wakinohama-cho Chuo-ku Kobe 651 (JP)**

(72) Inventor: **Okuda, Naoki**
**1718-35 Koshigoe Hamahura-shi Hanagawa-ken (JP)**
Inventor: **Usui, Akihiko**
**3-6-8 Miroku-ji Fujisawa-shi Hanagawa (JP)**
Inventor: **Yamamoto, Shigeaki**
**157-7 Ichinomiya Samukawa cho Koza-gun Kanagawa-ken (JP)**
Inventor: **Natsume, Shogo**
**731-1 Tebiro Kamakura-shi Kanagawa-ken (JP)**

(74) Representative: **Wright, Hugh Ronald et al Brookes & Martin 52/54 High Holborn London WC1V 6SE (GB)**

Courier Press, Leamington Spa, England.

## Description

This invention relates to a shielded metal arc welding electrode for welding Cr-Mo low alloy steels, which is capable of forming a weld with a high notch-toughness along with a low sensitivity to temper embrittling. The invention more particularly relates to a covered welding electrode which has Al and N positively added to one or both of its core wire and covering flux for use in obtaining such a weld.

Cr-Mo low alloy steels such as 1Cr-½Mo steel, 1¼Cr-½Mo steel, 2¼Cr-1Mo steel, 3Cr-1Mo steel and the like being materials of high heat resistance are widely applied industrially in the fields of high temperature and pressure boilders, petroleum industry, synthetic chemistry or for uses requiring resistance to high temperature and pressure hydrogen. Particularly Cr-Mo low alloy steels have been developed with a view to improving high temperature strength and high temperature creep characteristics, so that it has been the general practice for the high temperature strength of the deposited metal to be most important criterion in determining the weld designs of these materials. However Cr-Mo low alloy steels have recently come to be used in even severer environments, sometimes imposing a higher criteria on other characteristics. One characteristic to be improved is the low temperature notch-toughness to cope with increased use under cold climate, and a second characteristic is the formation of deposited metal which has a low sensitivity to temper embrittling which inevitably occurs, for example, in reactors which are used at high temperatures for a long time period, say ten to twenty years.

It is therefore desirable to improve the low-temperature notch-toughness in anticipation of the enhancement in the sensitivity to the temper embrittling, paying special attention to the composition of the deposited metal. Because refinement of pre-austenite structure is necessary for the improvement of the low-temperature notch-toughness we have studied the refinement of the pre-austenite structure and succeeded in improving the refinement by adding Al and N to the deposited metal. It may be that the AlN provides cores at the stage of crystallization, and the greater the number of cores, the finer the crystal grains become. Therefore, the presence of AlN ought to be confirmed by a reduction in the size of the crystal grains. It follows that the pre-austenite structure in the deposited metal ought to be finer by the addition of a certain amount of Al and N. Accordingly, the present invention is of especially significant importance to the welding of Cr-Mo low alloy steels and is not intended for those steels, in which temper embrittlement is not a problem, for example, steels with no or only a small Cr content like the 0.5 Mo steel which is used at relatively lower temperatures, or steels with a large Cr content which are immune from temper embrittling even at high temperatures.

The articles "Reheat Cracking Susceptibility of Some 2Cr-Mo Submerged Arc Weld Metals" by W. K. C. Jones (Welding Journal February 1976) and "The Resistances of Steels Containing Nitrides to Overheating During Electroslage Welding" by S. V. Egorova and L. I. Adeeva (Automatic Welding Vol. 32 (1979) October No. 10) have been considered but neither suggest that nitrogen should be present in the core wire and the flux of the welding electrode.

Thus the present invention has as its object the provision of a covered welding electrode which can be utilised to improve the low-temperature notch-toughness of Cr-Mo low alloy welds, and this effect is achieved by including Al and N in the deposited metal in an amount sufficient to make the pre-austenite structure finer, thereby forming a weld which has lower sensitivity to temper embrittling.

The invention also includes specific ranges of the component elements of the welding electrode not shown by the prior art.

According to the present invention there is provided a shielded metal arc welding electrode comprising a core wire and a covering flux, the core wire and/or covering flux including a proportion of C, Mn, Si, Cr, Mo, Al and Ni, characterised in that the core wire and covering flux also include a proportion of N, and furthermore include the alloy elements in the proportions satisfying the following conditions:

$$\{B_w \times [C(\%)]_2\} + \left\{\frac{A_f}{1-A_f} \times B_f \times [C(\%)]_f\right\} \leqq 0.13\%$$

$$\{B_w \times [Mn(\%)]_w\} + \left\{\frac{A_f}{1-A_f} \times B_f \times [Mn(\%)]_f\right\} \leqq 1.0\%$$

$$\{B_w \times [Si(\%)]_w\} + \left\{\frac{A_f}{1-A_f} \times B_f \times [Si(\%)]_f\right\} \leqq 0.6\%$$

$$\{B_w \times [Cr(\%)]_w\} + \left\{\frac{A_f}{1-A_f} \times B_f \times [Cr(\%)]_f\right\} = 0.5-3.5\%$$

2

$$\{B_w \times [Mo(\%)]_w\} + \left\{ \frac{A_f}{1-A_f} \times B_f \times [Mo(\%)]_f \right\} = 0.3-1.5\%$$

$$\{B_w \times [Al(\%)]_w\} + \left\{ \frac{A_f}{1-A_f} \times B_f \times [Al(\%)]_f \right\} = 0.002-0.04\%$$

$$\{B_w \times [N(\%)]_w\} + \left\{ \frac{A_f}{1-A_f} \times B_f \times [N(\%)]_f \right\} = 0.018-0.045\%$$

$$\{B_w \times [Ni(\%)]_w\} + \left\{ \frac{A_f}{1-A_f} \times B_f \times [Ni(\%)]_f \right\} \leqq 0.3\%$$

in which $B_w$ is a coefficient of yield in deposited metal of a wire-originating element and $B_f$ is a coefficient of yield in the deposited metal of the flux originating element, [element symbol (%)]$_w$ is the percentage by weight of that component element of the core wire to the total weight thereof, [element symbol (%)]$_f$ is the percentage by weight of that component element of the flux to the total weight thereof, and $A_f$ is the flux ratio (the weight ratio of the applied flux to the total weight of the welding electrode), said flux ratio $A_f$ being in the range of 0.23—0.32, and said yield coefficients $B_w$ and $B_f$ being in the following ranges:

|     | $B_w$ | $B_f$ |
| --- | --- | --- |
| C: | 0.5—1.0 | 0.1—0.8 |
| Mn: | 0.2—0.8 | 0.3—0.8 |
| Si: | 0.05—0.4 | 0.1—0.4 |
| Cr: | 0.5—1.0 | 0.5—1.0 |
| Mo: | 0.7—1.0 | 0.7—1.0 |
| Al: | 0.02—0.3 | 0.01—0.1 |
| N: | 1.0—1.7 | 0.3—0.9 |
| Ni: | 0.8—1.0 | 0.7—1.0 |

in which $B_w$ is a coefficient of yield in the deposited metal of a wire-originating element, $B_f$ is a coefficient of yield in the deposited metal of a flux-originating element, (element symbol [%])$_w$ is the percentage by weight of that component element of ohe core wire to the total weight thereof, (element symbol [%])$_f$ is the percentage by weight of that component element of the flux to the total weight thereof, and $A_f$ is the flux ratio (Weight rate of the applied flux to the total weight of the welding electrode).

The above and other features and advantages of the present invention will becomes apparent from the following description and the appended claims, taken in conjunction with the accompanying drawings.

In the accompanying drawing

Figure 1 is a heat pattern employed in a postweld heat treatment;

Figure 2 is a heat pattern employed in a temper embrittling test; and

Figure 3 is a diagrammatic illustration showing specimen sampling positions.

Firstly, it is to be noted that the percentages which appear in this specification are all percentages by weight unless otherwise specified.

The proportions of the elements in the core wire and/or the flux of a shielded metal arc welding electrode as set out according to the invention are determined by consideration of the yields of the respective elements and the ratio of the covering flux which are suitable for attaining the fundamental objective of the present invention, i.e.; to improve the low-temperature notch-toughness of the deposited metal in the welding of Cr-Mo low alloy steels. In the equations set out in the statement of invention the values of (element symbol [%])$_w$ and (element symbol [%])$_f$ are determined by the additive amount of the element to be blended into the core wire or flux. On the other hand, the value of $A_f$ (which is the symbol for the weight ratio of the covering flux) is specified in the applying stage but, in the case of the shielded metal arc welding electrode of the present invention, is selected from a range of 0.23 to 0.32. If $A_f$ is less than 0.23, the arc becomes unstable due to a deficiency in the amount of the arc stabilizer and/or the shielding of the deposited metal by the slag becomes insufficient due to a deficiency in the amount of the slag forming agent. On the contrary, if $A_f$ exceeds 0.32, it will cause excessive shielding of the deposited metal by the slag and irregularities in the appearance of the weld bead. Therefore, $A_f$ should be in the range of 0.23 to 0.32.

With regard to the yield coefficients $B_w$ and $B_f$, their values vary depending upon the affinity with oxygen of the element concerned and are influenced by the flux composition (e.g., by the contents of the generally blended components such as the slag-forming agent, arc stabilizer, gas generating agent and the like). Therefore, although it is difficult to apply constant values to the respective component elements, Table 1 below shows the ranges of $B_w$ and $B_f$ which are generally applicable to the respective component elements.

TABLE 1

|  | $B_w$ | $B_f$ |
|---|---|---|
| C | 0.5~1.0 | 0.1~0.8 |
| Mn | 0.2~0.8 | 0.3~0.8 |
| Si | 0.01~0.4 | 0.1~0.4 |
| Cr | 0.5~1.0 | 0.5~1.0 |
| Mo | 0.7~1.0 | 0.7~1.0 |
| Al | 0.02~0.3 | 0.01~0.1 |
| N | 1.0~1.7 | 0.3~0.9 |
| Ni | 0.8~1.0 | 0.7~1.0 |

Under these circumstances, the final yields of the respective alloy elements are restricted to particular ranges by the above-given yield equations for the following reasons.

[Yield of C≦0.13%]
The content of C is limited to 0.13% since the sensitivity to cracking of the deposited metal will be increased with the C-content in excess of 0.13%.

[Yield of Mn≦1.0%]
The content of Mn is limited to 1.0% since an Mn content in excess of 1.0% will increase the sensitivity to temper embrittling.

[Yield of Si≦0.6%]
The content of Si is limited to 0.6% since a greater Si content will invite the same defects as C and Mn.

[Yield of Cr=0.5—3.5%]
The lower limit of the Cr content is set at 0.5% since a Cr content less than 0.5% will degrade the high temperature strength to a level comparable to that of C-Mo steel and cause deterioration in oxidation resistance as well as in corrosion resistance. On the other hand, if it exceeds 3.5% there will not be any significant improvement in the temper embrittling during long use at high temperatures, thus failing to attain the technical effect which should be produced by the positive blending of Al and N. Therefore, the upper limit of the Cr content is placed at 3.5%.

[Yield of Mo=0.3—1.5%]
The lower limit of the Mo yield is placed at 0.3 because a lower Mo content is insufficient to produce the expected improvement of high temperature strength. On the other hand, a Mo content in excess of 1.5% will result in reduced notch-toughness and an increase of sensitivity to temper embrittling. Accordingly, the upper limit is placed at 1.5%.

[Yield of Al=0.002—0.04%]
If it is less than 0.002%, there will not be effective production of AlN, so that pre-austenite structure will not be finer and as a result there would be a lowering of the notch-toughness and an increase of the sensitivity to temper embrittling. The lower limit of the Al yield should therefore be placed at 0.002%. This refining effect is produced to a distinctive degree with an Al yield greater than 0.01%. However, if its yield exceeds 0.04%, excess Al remains after the formation of AlN and is oxidized into Al-oxides so lowering the notch-toughness of the deposited metal. Therefore, the upper limit of Al is set at 0.04%.

[Yield of N=0.018—0.045%]

If the yield of N is less than 0.018%, insufficient AIN will be produced, giving rise to the same defect as in the case of Al. Therefore, the lower limit of N is placed at 0.018%. With a yield of N in excess of 0.045%, however, some N is not contained in the deposited metal and impairs the weldability or usability. Thus, the upper limit is placed at 0.045%.

[Yield of Ni≦0.3%]

The element Ni improves the notch-toughness but its yield should be limited to 0.3% since otherwise it will worsen the sensitivity to temper embrittling.

In order to satisfy the foregoing conditions of yield ranges of the elements C, Mn, Si, Cr, Mo, Al, N and Ni: the core wire is preferred to contain in percentage by weight C≦0.26, Mn≦5.0, Si≦12.0, Cr≦7.0, Mo≦2.1, Al≦2.0, N≦0.045, and Ni≦0.37; and flux is preferred to contain C≦4.3, Mn≦11.1, Si≦20.0, Cr≦23.3, Mo≦7.1, Al≦13.4, N≦0.5, and Ni≦1.4.

In addition to the above mentioned alloy elements, the core wire of the welding electrode according to the present invention contains iron and inevitable impurities. Of the impurity elements, P, Sb, Sn and As tend to diffuse and segregate in gumma grain boundaries of the pre-austenite structure. However, the gumma grain size can be minimized by the production of AIN, so that the concentration of the segregated impurities can be lowered, lessening the disadvantage of such segregation of impurities. Nevertheless, the each content of P, Sb, Sn and As which as a whole impose an adverse effect on the temper embrittling sensitivity is desired to be <0.01%. Besides the above mentioned alloy elements, the covering flux of the welding electrode of the present invention naturally contains a slag forming agent, an arc stabilizer, a gas generating agent and the like, which may be selected as desired from known materials. In a case where it is desired to improve particularly the high temperature strength, the flux and/or core wire may contain at least one element selected from V, Nb, Ti and B.

Thus, according to the present invention, it has become possible to improve the low-temperature notch-toughness after welding and to maintain low sensitivity to temper embrittling even during use at high temperatures over a long period of time.

The invention is illustrated more particularly by way of examples but they should not be construed as being restrictive of the technical details of the present invention.

Examples

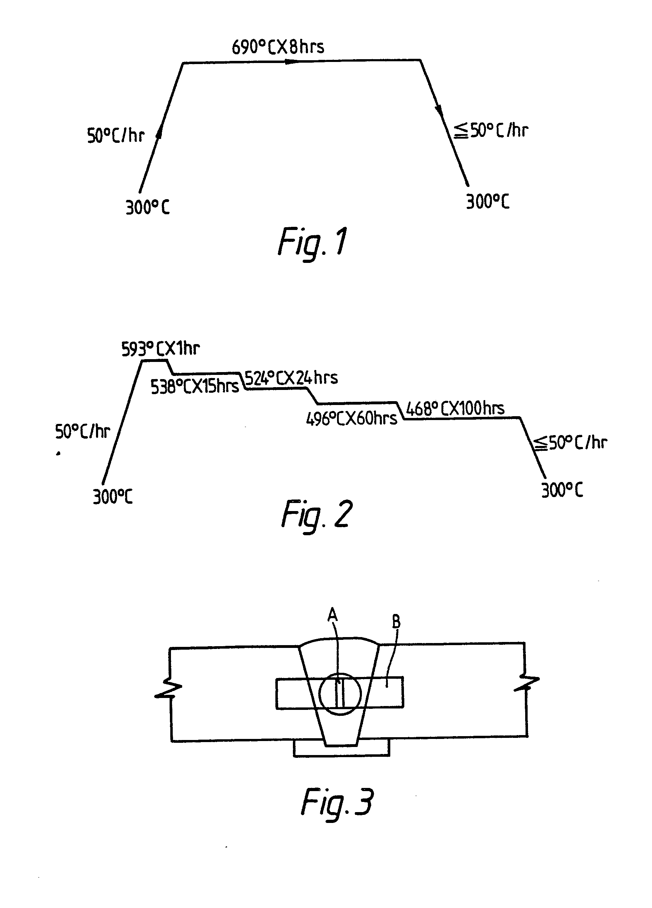

There were prepared core wires of the compositions shown in Table 2 and fluxes of the compositions shown at (a) and (b) of Table 3, to provide shielded metal arc welding electrodes using various combinations of core wires and fluxes as shown in Table A. These electrodes were used for shielded metal arc welding of works (see the foot note of Table 4) to obtain deposited metals shown in the same table. Some of the deposited metals were subjected to postweld heat treatment (stress relief annealing) using the heat pattern of Figure 1 while some were further subjected to an artificial temper embrittling head treatment (step cooling), using a heat pattern of Figure 2 for a comparison in studying the effect of the present invention. The specimens for the tensile test and the Charpy impact tests were sampled from sections A and B of Figure 3, respectively.

TABLE 2

| C. Wires | C | Mn | Si | Cr | Mo | Al | N | Ni |
|---|---|---|---|---|---|---|---|---|
| W-1 | 0.09 | 0.52 | 0.01 | 0.02 | 0.003 | 0.006 | 0.008 | 0.015 |
| W-2 | 0.07 | 0.42 | 0.20 | 1.31 | 0.54 | 0.003 | 0.006 | 0.10 |
| W-3 | 0.06 | 0.46 | 0.19 | 2.30 | 1.01 | 0.004 | 0.005 | 0.010 |
| W-4 | 0.07 | 0.45 | 0.19 | 2.32 | 1.05 | 0.08 | 0.015 | 0.15 |
| W-5 | 0.08 | 0.50 | 0.13 | 2.33 | 1.02 | 0.10 | 0.006 | 0.18 |
| W-6 | 0.11 | 0.55 | 0.10 | 2.30 | 1.04 | 0.08 | 0.020 | 0.18 |

(wt%)

N.B. The balance is Fe and inevitable impurities.

5

TABLE 3(a)

| Fluxes | CaCo$_3$+MgCO$_3$+BaCO$_3$ | CaF$_2$+BaF$_2$ | SiO$_2$+Al$_2$O$_3$+ZrO$_2$+TiO$_2$ | C |
|--------|------------------|---------|-----------------------|------|
| F-1 | 44 | 23 | 10 | 0.12 |
| F-2 | 47 | 21 | 10 | 0.11 |
| F-3 | 42 | 25 | 11 | 0.11 |
| F-4 | 50 | 24 | 15 | — |
| F-5 | 50 | 25 | 15 | — |
| F-6 | 52 | 20 | 10 | — |
| F-7 | 45 | 22 | 9 | 0.12 |
| F-8 | 52 | 24 | 14 | — |

(wt%)

TABLE 3(b)

| Fluxes | Mn | Si | Cr | Mo | Al | N | Ni | Others |
|--------|-----|-----|-----|-----|-----|------|-----|--------|
| F-1 | 1.5 | 3.1 | 6.5 | 2.8 | 1.4 | 0.04 | 0.3 | 7.2 |
| F-2 | 1.3 | 3.2 | 6.3 | 2.7 | 0.5 | 0.01 | 0.3 | 7.6 |
| F-3 | 1.2 | 3.0 | 6.5 | 2.8 | — | — | 0.4 | 8.0 |
| F-4 | 2.1 | 4.0 | — | — | — | — | — | 4.9 |
| F-5 | 2.0 | 3.9 | — | — | 1.5 | 0.04 | 0.2 | 2.4 |
| F-6 | 2.4 | 4.1 | 2.3 | — | — | — | — | 9.2 |
| F-7 | 1.3 | 3.2 | 6.4 | 2.7 | 3.8 | 0.1 | 0.3 | 6.1 |
| F-8 | 1.2 | 2.8 | — | — | — | — | — | 6.0 |

(wt%)

N.B. The balance is Fe and inevitable impurities.

# 0 076 055

## TABLE 4

| Experiment | No. | W. No. | F. No. | C | Mn | Si | Cr | Mo | Ni | Al | N |
|---|---|---|---|---|---|---|---|---|---|---|---|
| Example | 1 | W-1 | F-1 | 0.11 | 0.75 | 0.28 | 2.14 | 0.97 | 0.20 | 0.023 | 0.030 |
| C. Example | 2 | " | F-2 | 0.10 | 0.65 | 0.29 | 2.07 | 0.94 | 0.18 | 0.008 | 0.015 |
| " | 3 | " | F-3 | 0.10 | 0.64 | 0.27 | 2.18 | 1.00 | 0.18 | 0.003 | 0.014 |
| " | 4 | " | F-7 | 0.09 | 0.67 | 0.30 | 2.13 | 0.96 | 0.16 | 0.062 | 0.055 |
| " | 5 | W-2 | F-4 | 0.08 | 0.73 | 0.42 | 1.28 | 0.50 | 0.09 | Tr | 0.014 |
| Example | 6 | " | F-5 | 0.07 | 0.70 | 0.41 | 1.29 | 0.51 | 0.10 | 0.020 | 0.025 |
| C. Example | 7 | W-3 | F-4 | 0.06 | 0.72 | 0.40 | 2.17 | 0.99 | 0.012 | 0.004 | 0.016 |
| Example | 8 | " | F-5 | 0.07 | 0.71 | 0.38 | 2.20 | 1.00 | 0.11 | 0.025 | 0.028 |
| C. Example | 9 | " | F-6 | 0.08 | 0.50 | 0.41 | 2.78 | 0.96 | 0.01 | 0.004 | 0.016 |
| Example | 10 | W-4 | F-6 | 0.08 | 0.52 | 0.42 | 2.80 | 0.98 | 0.16 | 0.016 | 0.027 |
| C. Example | 11 | W-5 | F-4 | 0.07 | 0.78 | 0.38 | 2.26 | 1.01 | 0.16 | 0.020 | 0.015 |
| Example | 12 | W-6 | F-8 | 0.10 | 0.78 | 0.30 | 2.25 | 1.03 | 0.18 | 0.005 | 0.028 |

(wt%)

N.B. 1) The Balance is Fe and inevitable impurities.
2) Work: ASTM A387 Gr. 11 Cl. 2 in Ex. Nos. 5 & 6.
ASTM A387 Gr. 22 Cl. 2 in Ex. Nos. 1—4, 7, 8 & 11—12
ASTM A387 Gr. 21 Cl. 2 in Ex. Nos. 9 & 10.

## TABLE 5

| Experiment | No. | Tensile strength (kgf/mm$^2$) | Elonga-tion (%) | Charpy impact value (kgfm, −30°C) | | | | | |
|---|---|---|---|---|---|---|---|---|---|
| | | | | As SR* | | | SR+SC* | | |
| Example | 1 | 64.0 | 27 | 12.2 | 14.5 | 16.9 | 10.8 | 15.0 | 16.1 |
| C. Example | 2 | 62.7 | 30 | 7.4 | 6.5 | 10.2 | 5.8 | 5.5 | 9.7 |
| " | 3 | 62.4 | 28 | 4.8 | 6.2 | 2.8 | 4.2 | 1.5 | 3.8 |
| " | 4 | 65.9 | 25 | 2.5 | 3.1 | 4.2 | 0.8 | 1.2 | 3.8 |
| " | 5 | 62.5 | 27 | 6.2 | 7.4 | 7.6 | 4.8 | 5.2 | 5.5 |
| Example | 6 | 63.3 | 28 | 19.2 | 18.6 | 18.8 | 18.8 | 16.4 | 17.5 |
| C. Example | 7 | 67.0 | 23 | 2.6 | 3.7 | 4.2 | 2.6 | 0.9 | 1.4 |
| Example | 8 | 64.2 | 30 | 14.5 | 16.2 | 15.5 | 13.8 | 14.2 | 15.5 |
| C. Example | 9 | 67.3 | 25 | 2.8 | 3.5 | 4.8 | 2.8 | 0.9 | 1.1 |
| Example | 10 | 65.8 | 29 | 17.4 | 16.8 | 16.8 | 15.1 | 15.8 | 16.2 |
| C. Example | 11 | 66.3 | 26 | 4.2 | 4.8 | 1.4 | 3.8 | 0.9 | 0.8 |
| Example | 12 | 63.8 | 28 | 10.1 | 8.8 | 10.1 | 8.6 | 10.1 | 9.5 |

N.B. As SR: After stress relieving annealing.
AR+SC: After stress relieving annealing and step cooling.

7

**0 076 055**

Examples of the invention and comparative examples both gave satisfactory results in tensile strength and elongation, and no distinctive differences were observed therebetween except the Charpy impact value. In that case, the comparative examples were irregular and generally low in the Charpy impact value in the stage immediately after the post weld heat treatment, and exhibited a considerable drop in the Charpy impact value after the temper embrittling heat treatment. In contrast, examples of the present invention all exhibited satisfactory low-temperature notch-toughness, maintaining a high level of the toughness even after the temper embrittling heat treatment.

**Claims**

1. A shielded metal arc welding electrode comprising a core wire and a covering flux, the core wire and/or covering flux including a proportion of C, Mn, Si, Cr, Mo, Al and Ni, characterised in that the core wire and covering flux also include a proportion of N, and furthermore include the alloy elements in the proportions satisfying the following conditions:

$$\{B_w \times [C(\%)]_w\} + \left\{ \frac{A_f}{1-A_f} \times B_f \times [C(\%)]_f \right\} \leq 0.13\%$$

$$\{B_w \times [Mn(\%)]_w\} + \left\{ \frac{A_f}{1-A_f} \times B_f \times [Mn(\%)]_f \right\} \leq 1.0\%$$

$$\{B_w \times [Si(\%)]_w\} + \left\{ \frac{A_f}{1-A_f} \times B_f \times [Si(\%)]_f \right\} \leq 0.6\%$$

$$\{B_w \times [Cr(\%)]_w\} + \left\{ \frac{A_f}{1-A_f} \times B_f \times [Cr(\%)]_f \right\} = 0.5 - 3.5\%$$

$$\{B_w \times [Mo(\%)]_w\} + \left\{ \frac{A_f}{1-A_f} \times B_f \times [Mo(\%)]_f \right\} = 0.3 - 1.5\%$$

$$\{B_w \times [Al(\%)]_w\} + \left\{ \frac{A_f}{1-A_f} \times B_f \times [Al(\%)]_f \right\} = 0.002 - 0.04\%$$

$$\{B_w \times [N(\%)]_w\} + \left\{ \frac{A_f}{1-A_f} \times B_f \times [N(\%)]_f \right\} = 0.018 - 0.045\%$$

$$\{B_w \times [Ni(\%)]_w\} + \left\{ \frac{A_f}{1-A_f} \times B_f \times [Ni(\%)]_f \right\} \leq 0.3\%$$

in which $B_w$ is a coefficient of yield in deposited metal of a wire-originating element and $B_f$ is a coefficient of yield in the deposited metal of the flux originating element, $[element\ symbol\ (\%)]_w$ is the percentage by weight of that component element of the core wire to the total weight thereof, $[element\ symbol\ (\%)]_f$ is the percentage by weight of that component element of the flux to the total weight thereof, and $A_f$ is the flux ratio (the weight ratio of the applied flux to the total weight of the welding electrode), said flux ratio $A_f$ being in the range of 0.23—0.32, and said yield coefficients $B_w$ and $B_f$ being in the following ranges:

**0 076 055**

|  | $B_w$ | $B_f$ |
|---|---|---|
| C: | 0.5—1.0 | 0.1—0.8 |
| Mn: | 0.2—0.8 | 0.3—0.8 |
| Si: | 0.05—0.4 | 0.1—0.4 |
| Cr: | 0.5—1.0 | 0.5—1.0 |
| Mo: | 0.7—1.0 | 0.7—1.0 |
| Al: | 0.02—0.3 | 0.01—0.1 |
| N: | 1.0—1.7 | 0.3—0.9 |
| Ni: | 0.8—1.0 | 0.7—1.0 |

2. The shielded arc welding electrode of claim 1, wherein said flux contains in percentage by weight C present but less than or equal to 4.3, Mn present but less than or equal to 11.1, Si present but less than or equal to 20.0, Cr present but less than or equal to 23.3, Mo present but less than or equal to 7.1, Al present but less than or equal to 13.4, N present but less than or equal to 0.5 and Ni present but less than or equal to 1.4.

3. The shielded arc welding electrode of claims 1 or 2, wherein said core wire contains in percentage by weight C present but less than or equal to 0.26, Mn present but less than or equal to 5.0, Si present but less than or equal to 12.0, Cr present but less than or equal to 7.0, Mo present but less than or equal to 2.1, Al present but less than or equal to 2.0, N present but less than or equal to 0.045 and Ni present but less than or equal to 0.37.

**Patentansprüche**

1. Ummantelte Elektrode zum Metall-Lichtbogen-Schweißen mit einem Kerndraht und einer Schmelzmittel-Umhüllung, wobei der Kerndraht und/oder die Schmelzmittel-Umhüllung einen Anteil an C, Mn, Si, Cr, Mo, Al und Ni umfassen, dadurch gekennzeichnet, daß der Kerndraht und die Schmelzmittel-Umhüllung auch einen Anteil an N enthalten und außerdem die Anteile der Legierungselemente folgende Bedingungen erfüllen:

$$\{B_w \times [C(\%)]_w\} + \{\frac{A_f}{1-A_f} \times B_f \times [C(\%)]_f\} \leqq 0.13\%$$

$$\{B_w \times [Mn(\%)]_w\} + \{\frac{A_f}{1-A_f} \times B_f \times [Mn(\%)]_f\} \leqq 1.0\%$$

$$\{B_w \times [Si(\%)]_w\} + \{\frac{A_f}{1-A_f} \times B_f \times [Si(\%)]_f\} \leqq 0.6\%$$

$$\{B_w \times [Cr(\%)]_w\} + \{\frac{A_f}{1-A_f} \times B_f \times [Cr(\%)]_f\} = 0.5—3.5\%$$

$$\{B_w \times [Mo(\%)]_w\} + \{\frac{A_f}{1-A_f} \times B_f \times [Mo(\%)]_f\} = 0.3—1.5\%$$

$$\{B_w \times [Al(\%)]_w\} + \{\frac{A_f}{1-A_f} \times B_f \times [Al(\%)]_f\} = 0.002—0.04\%$$

$$\{B_w \times [N(\%)]_w\} + \{\frac{A_f}{1-A_f} \times B_f \times [N(\%)]_f\} = 0.018—0.045\%$$

9

$$\{B_w\text{x}[Ni(\%)]_w\}+\{\frac{A_f}{1-A_f}\text{x}B_f\text{x}[Ni(\%)]_f\}\leqq 0.3\%$$

wobei $B_w$ ein Ertragskoeffizient an abgelagertem Metall eines den Draht bildenden Elementes ist und $B_f$ ein Ertragskoeffizient an abgelagertem Metall des Schmelzmittel bildenden Elementes ist, [Element-symbol $(\%)]_w$ die Gewichtsprozente dieser Elementkomponente des Kerndrahts zum Gesamtgewicht davon ist, [Elementsymbol $(\%)]_f$ die Gewichtsprozente dieser Elementkomponente des Schmelzmittels zum Gesamtgewicht davon ist und $A_f$ das Schmelzmittelverhältnis (das Gewichtsverhältnis des aufgetragenen Schmelzmittels zum Gesamtgewicht der Schweißelektrode) ist, wobei das Schmelzmittelverhältnis $A_f$ im Bereich von 0,23 bis 0,32 liegt und die Ertragskoeffizienten $B_w$ und $B_f$ in den folgenden Bereichen liegen:

|     | $B_w$      | $B_f$      |
|-----|------------|------------|
| C:  | 0.5—1.0    | 0.1—0.8    |
| Mn: | 0.2—0.8    | 0.3—0.8    |
| Si: | 0.05—0.4   | 0.1—0.4    |
| Cr: | 0.5—1.0    | 0.5—1.0    |
| Mo: | 0.7—1.0    | 0.7—1.0    |
| Al: | 0.02—0.3   | 0.01—0.1   |
| N:  | 1.0—1.7    | 0.3—0.9    |
| Ni: | 0.8—1.0    | 0.7—1.0    |

2. Ummantelte Elektrode zum Lichtbogenschweißen nach Anspruch 1, worin das Schweißmittel in Gewichtsprozenten enthält: C, vorhanden, aber weniger als oder gleich 4,3, Mn, vorhanden, aber weniger als oder gleich 11,1, Si, vorhanden, aber weniger als oder gleich 20,0, Cr, vorhanden, aber weniger als oder gleich 23,3, Mo, vorhanden, aber weniger also oder gleich 7,5, Al, vorhanden, aber weniger als oder gleich 13,4, N, vorhanden, aber weniger als oder gleich 0,5 und Ni, vorhanden, aber weniger als oder gleich 1,4.

3. Ummantelte Elektrode zum Lichtbogenschweißen nach Anspruch 1 oder 2, worin der Kerndraht in Gewichtsprozenten enthält: C, vorhanden, aber weniger als oder gleich 0,26, Mn, vorhanden, aber weniger als oder gleich 5,0, Si, vorhanden, aber weniger als oder gleich 12,0, Cr, vorhanden, aber weniger als oder gleich 7,0, Mo, vorhanden, aber weniger als oder gleich 2,1, Al, vorhanden, aber weniger als oder gleich 2,0, N, vorhanden, aber weniger als oder gleich 0,045 und Ni, vorhanden, aber weniger als oder gleich 0,37.

**Revendications**

1. Electrode enrobée pour soudage à l'arc de métaux comprenant une âme métallique et un flux de couverture, l'âme métallique et/ou le flux de couverture incluant une proportion de C, Mn, Si, Cr, Mo, Al et Ni, caractérisée en ce que l'âme métallique et le flux de couverture comprennent également une proportion de N et incluent de plus des éléments d'alliage dans des proportions satisfaisant aux conditions suivantes:

$$\{B_w\text{x}[C(\%)]_w\}+\{\frac{A_f}{1-A_f}\text{x}B_f\text{x}[C(\%)]_f\}\leqq 0.13\%$$

$$\{B_w\text{x}[Mn(\%)]_w\}+\{\frac{A_f}{1-A_f}\text{x}B_f\text{x}[Mn(\%)]_f\}\leqq 1.0\%$$

$$\{B_w\text{x}[Si(\%)]_w\}+\{\frac{A_f}{1-A_f}\text{x}B_f\text{x}[Si(\%)]_f\}\leqq 0.6\%$$

$$\{B_w\text{x}[Cr(\%)]_w\}+\{\frac{A_f}{1-A_f}\text{x}B_f\text{x}[Cr(\%)]_f\}=0.5—3.5\%$$

$$\{B_w \times [Mo(\%)]_w\} + \{\frac{A_f}{1-A_f} \times B_f \times [Mo(\%)]_f\} = 0.3 - 1.5\%$$

$$\{B_w \times [Al(\%)]_w\} + \{\frac{A_f}{1-A_f} \times B_f \times [Al(\%)]_f\} = 0.002 - 0.04\%$$

$$\{B_w \times [N(\%)]_w\} + \{\frac{A_f}{1-A_f} \times B_f \times [N(\%)]_f\} = 0.018 - 0.045\%$$

$$\{B_w \times [Ni(\%)]_w\} + \{\frac{A_f}{1-A_f} \times B_f \times [Ni(\%)]_f\} \leqq 0.3\%$$

où $B_w$ est un coefficient de rendement d'un élément d'origine de l'âme métallique dans le métal déposé, $B_f$ est un coefficient de rendement de l'élément d'origine du flux dans le métal déposé, [symbole d'élément $(\%)]_w$ est le pourcentage en poids de cet élément composant de l'âme métallique par rapport au poids total de célui-ci, [symbole d'élément $(\%)]_f$ est le pourcentage en poids de cet élément de flux par rapport au poids total de celui-ci, et $A_f$ est le taux du flux (le rapport de poids du flux appliqué au poids total de l'électrode de soudage), ce taux de flux $A_f$ étant compris entre 0,23 et 0,32 et ces coefficients de rendement $B_w$ et $B_f$ étant dans les proportions suivantes:

|       | $B_w$      | $B_f$       |
|-------|------------|-------------|
| C:    | 0,5—1,0    | 0,1—0,8     |
| Mn:   | 0,2—0,8    | 0,3—0,8     |
| Si:   | 0,05—0,4   | 0,1—0,4     |
| Cr:   | 0,5—1,0    | 0,5—1,0     |
| Mo:   | 0,7—1,0    | 0,7—1,0     |
| Al:   | 0,02—0,3   | 0,01—0,1    |
| N:    | 1,0—1,7    | 0,3—0,9     |
| Ni:   | 0,8—1,0    | 0,7—1,0     |

2. Electrode enrobée pour soudage à l'arc selon la revendication 1, dans laquelle ce flux comprend une présence de C dans un pourcentage en poids inférieur ou égal à 4,3; une présence de Mn dans un pourcentage inférieur ou égal à 11,1; une présence de Si dans un pourcentage inférieur ou égal à 20,0; une présence de Cr dans un pourcentage inférieur ou égal à 23,3; une présence de Mo dans un pourcentage inférieur ou égal à 7,1; une présence d'Al dans un pourcentage inférieur ou égal à 13,4; une présence de N dans un pourcentage inférieur ou égal à 0,5 et une présence de Ni dans un pourcentage inférieur ou égal à 1,4.

3. Electrode enrobée pour soudage à l'arc selon les revendications 1 et 2, dans laquelle cette âme métallique comprend une présence de C dans un pourcentage en poids inférieur ou égal à 0,26; une présence de Mn dans un pourcentage inférieur ou égal à 5,0; une présence de Si dans un pourcentage inférieur ou égal à 12,0; une présence de Cr dans un pourcentage inférieur ou égal à 7,0; une présence de Mo dans un pourcentage inférieur ou égal à 2,1; une présence d'Al dans un pourcentage inférieur ou égal à 2,0; une présence de N dans un pourcentage inférieur ou égal à 0,045 et une présence de Ni dans un pourcentage inférieur ou égal à 0,37.

Fig. 1

Fig. 2

Fig. 3